# EUROPÄISCHE PATENTSCHRIFT

(11) **EP 3 496 245 B1**
(45) Veröffentlichungstag und Bekanntmachung des Hinweises auf die Patenterteilung: **18.09.2024**
(21) Anmeldenummer: 19152090.7
(22) Anmeldetag: 08.02.2012
(51) Int. Cl.: H02K 11/00, G01P 13/04, G07C 3/00, H02K 11/21, H02K 11/20

(54) **ELEKTROMOTOR**
ELECTRIC MOTOR
MOTEUR ÉLECTRIQUE

(43) Veröffentlichungstag der Anmeldung: 12.06.2019
(62) Teilanmeldung aus: 12154489.4
(73) Patentinhaber: Grundfos Holding A/S, 8850 Bjerringbro (DK)
(72) Erfinder: Sofussen, Morten, 8850 Bjerringbro (DK); Volsgaard Jakobsen, Inger-Lise, 8850 Bjerringbro (DK)
(74) Vertreter: Patentanwälte Hemmer Lindfeld Frese Partnerschaft mbB

(56) Entgegenhaltungen:
- CA-A1- 2 540 610
- CN-A- 1 402 202
- DE-A1- 4 409 448
- JP-A- 2004 101 498
- JP-A- S57 144 466
- JP-U- H0 618 383
- US-A- 5 237 310

## Beschreibung

Die Erfindung betrifft einen Elektromotor mit den im Oberbegriff des Anspruchs 1 angegebenen Merkmalen.

Bei Elektromotoren zählt es zum Stand der Technik, unterschiedliche Betriebszustände des Motors mit einem oder mehreren Leuchtmitteln anzuzeigen. So zählt es beispielsweise bei von einem Elektromotor angetriebenen Kreiselpumpen zum Stand der Technik, den Betrieb der Pumpe durch eine blinkende Leuchtdiode anzuzeigen, wobei die Blinkfrequenz in Abhängigkeit der Drehzahl des Motors variieren kann. Um den Betriebszustand eines solchen Motors zu erfassen, ist es regelmäßig erforderlich, die Betriebsanweisung zu lesen, in der angegeben ist, welche Lichtsymbolik welchem Betriebszustand entspricht. Dies ist vergleichsweise aufwändig, da es stets das Vorhandensein der Betriebsanleitung und die Einsichtnahme darein erfordert, was nachteilig ist.

Es zählt bei Motoren zum Stand der Technik durch ein dauernd eingeschaltetes Leuchtmittel den Betriebszustand des laufenden Motors anzuzeigen. Beispielsweise beschreibt die JP H06 18383 U eine mechanische Winsch, die durch einen Fahrzeugverbrennungsmotor angetrieben wird. Ein Überwachungsgerät zeigt mittels einer Anzahl von leuchtenden LEDs eine qualitative Drehgeschwindigkeit und -richtung der Winsch an. In der DE 44 09 448 A1 ist eine Elektro-Hydroanlage beschrieben, bei der basierend auf der Phasenfolgerichtung des elektrischen Eingangsstroms entweder die eine oder die andere von zwei LEDs entsprechend der Drehrichtung eines Elektromotors leuchtet. Es gibt jedoch auch Motoren, bei denen ein blinkendes Leuchtmittel auf den laufenden Zustand des Motors hinweist. Andererseits werden Blinkfunktionen von Leuchtmittel häufig dazu genutzt, um nicht bestimmungsgemäße Betriebszustände, wie beispielsweise den Stillstand des Motors zu signalisieren. DE 4409448 offenbart einen Motordrehrichtungsdetektor für einen Elektromotor mit zwei LEDs zur Anzeige der Drehrichtung.

Vor diesem Stand der Technik liegt der Erfindung die Aufgabe zugrunde, ein Bedienteil für einen gattungsgemäßen Elektromotor so auszubilden, dass zumindest ein Betriebszustand des Elektromotors bei laufendem Motor ohne weiteres erkennbar ist.

Diese Aufgabe wird gemäß der Erfindung durch ein Bedienteil mit den in Anspruch 1 angegebenen Merkmalen gelöst. Vorteilhafte Ausgestaltungen der Erfindung sind in den Unteransprüchen, der nachfolgenden Beschreibung und der Zeichnung angegeben.

Das erfindungsgemäße Bedienteil für einen Elektromotor weist eine Signaleinrichtung zur Anzeige von mindestens zwei unterschiedlichen Betriebszuständen des Motors auf. Hierzu ist ein elektrisches Leuchtmittel vorgesehen, das bei laufendem Motor blinkend geschaltet ist. Gemäß der Erfindung sind mindestens sechs Leuchtmittel als Leuchtmittelring ringförmig angeordnet vorgesehen, welche bei laufendem Motor synchron zueinander jedoch paarweise im Uhrzeigersinn oder im Gegenuhrzeigersinn aufeinanderfolgend zeitlich versetzt blinkend geschaltet sind, wobei jeweils zwei der Leuchtmittel diametral im Leuchtmittelring gegenüberliegend als ein Leuchtmittelpaar eingeschaltet sind, wobei bei Ausfall eines Leuchtmittels nicht die ganze Anzeige ausfällt, sondern dann für dieses Leuchtmittelpaar mit einem Leuchtmittel noch in Betrieb bleibt. Grundgedanke der vorliegenden Erfindung ist es, mittels mindestens sechs Leuchtmitteln einen Bewegungszustand darzustellen, welcher unmittelbar auf einen laufenden Motor schließen lässt. Mit den mindestens sechs Leuchtmitteln ist es möglich, wenn diese synchron zueinander jedoch zeitlich versetzt blinkend geschaltet sind, eine Bewegung darzustellen. Insbesondere bei der Verwendung mehrerer Leuchtmittel kann eine Art Lauflicht geschaffen werden, welches zum einen eine wesentlich bessere Erkennbarkeit als Einzelleuchtmittel aufweist und zum anderen eine Bewegung, einen Fluss oder dergleichen darstellt, anhand dessen auch der unbedarfte Beobachter selbsterklärend den Betriebszustand des laufenden Motors erkennt.

Grundsätzlich könnte mit zwei nebeneinander angeordneten Leuchtmitteln ein Bewegungseffekt dargestellt werden. Erfindungsgemäß wird ein solcher jedoch mit sechs oder mehr Leuchtmitteln dargestellt, wobei insbesondere bei Motoren, die eine Rotation ausführen, wie dies bei den meisten Elektromotoranwendungen der Fall ist, eine ringförmige Anordnung der Leuchtmittel vorgesehen ist, da dann mittels dieser Leuchtmittel die Drehbewegung des Motors darstellbar ist. Wenn sechs oder mehr Leuchtmittel ringförmig angeordnet sind, dann sind diese gemäß der Erfindung bei laufendem Motor synchron zueinander jedoch paarweise aufeinanderfolgend zeitlich versetzt blinkend geschaltet. D. h. die Leuchtdioden blinken entweder im Uhrzeigersinn aufeinanderfolgend oder im Gegenuhrzeigersinn aufeinanderfolgend. Dabei kann eine gewisse Überlappung der Einschaltzeiten vorteilhaft sein, um ein natürliches Aussehen der Anzeige zu erreichen, also ein natürliches Aussehen der zu symbolisierenden Drehbewegung darzustellen. Wie weit eine Überlappung erfolgt oder nicht und in welchem Takt das Blinken erfolgt, kann auf einfache Weise ermittelt werden und ist für den jeweiligen Anwendungszweck von Fall zu Fall zu wählen. So kann durch unterschiedliche Blinkgeschwindigkeiten eine gewisse Drehzahldarstellung erfolgen, d. h. bei einem langsam laufenden Motor erfolgt ein langsames und bei einem schnell laufenden Motor ein schnelles Blinken. In analoger Weise kann bei der ringförmigen Anordnung die Drehrichtung des Motors dargestellt werden, so kann ein Lauflichteffekt im Uhrzeigersinn oder gegen den Uhrzeigersinn erfolgen, je nachdem ob die Motorwelle im Uhrzeigersinn oder gegen den Uhrzeigersinn dreht.

Es hat sich herausgestellt, dass eine besonders natürlich und gleichmäßig ruhig wirkende Anzeige dann erzielbar ist, weil sechs Leuchtmittel ringförmig angeordnet sind, die bei laufendem Motor synchron zueinander jedoch paarweise aufeinanderfolgend zeitlich versetzt blinkend geschaltet sind. Bei einer solchen Anordnung sind jeweils zwei diametral gegenüberliegend im Ring angeordnete Leuchtmittel eingeschaltet bzw. wandert dieses eingeschaltete Leuchtmittelpaar in Drehrichtung rechts- oder linksherum, was eine besonders gute Ablesbarkeit bedingt. Schon von größerer Entfernung kann daher bei entsprechender Anordnung einer solchen Signaleinrichtung am Motor festgestellt werden, ob dieser bestimmungsgemäß läuft, gegebenenfalls auch in welcher Richtung und mit welcher Drehzahl, wobei hinsichtlich der Drehzahl typischerweise Tendenzen wie untere Drehzahl, mittlere Drehzahl, hohe Drehzahl anzeigbar sind. Die paarweise Leuchtmittelanordnung hat darüber hinaus den Vorteil, dass bei Ausfall eines Leuchtmittels nicht die ganze Anzeige ausfällt sondern dann für dieses Leuchtmittelpaar mit einem Leuchtmittel noch in Betrieb bleibt und auch gut erkennbar bleibt.

Besonders gut erkennbar sind die Leuchtmittel, wenn sie kreisringförmig angeordnet sind.

Bei der gleichzeitigen Ansteuerung von zwei Leuchtmitteln ist es besonders vorteilhaft, wenn diese diametral angeordnet sind, da dies die Erkennbarkeit und die natürliche Darstellung einer Drehbewegung fördert.

Vorteilhaft kann innerhalb des Leuchtmittelrings gemäß einer Weiterbildung der Erfindung ein zentrales Leuchtmittel angeordnet sein. Dieses zentrale Leuchtmittel kann beispielsweise dazu dienen, den Einschaltzustand darzustellen, d. h. darzustellen, ob der Elektromotor eingeschaltet ist oder nicht oder ob am Elektromotor Spannung anliegt oder nicht. Alternativ kann hiermit auch ein Fernsteuerzustand oder eine andere Betriebseigenschaft angezeigt werden.

Wenn weitere Betriebszustände angezeigt werden sollen, wie beispielsweise Temperatur, Druck oder dergleichen, kann es erforderlich oder zweckmäßig sein, hierfür weitere Leuchtmittel vorzusehen. Gemäß einer vorteilhaften Weiterbildung der Erfindung sind diese Leuchtmittel dann innerhalb eines oder mehrerer vorzugsweise konzentrischer Ringe angeordnet. Eine solche Anordnung ist zum einen optisch ansprechend, zum anderen raumsparend.

Vorteilhaft erfolgt die Schaltung der Leuchtmittel so, dass bei eingeschaltetem stehenden Motor mindestens ein Leuchtmittel oder Leuchtmittelpaar dauerhaft eingeschaltet ist. Durch die ringförmige Anordnung der Leuchtmittel oder Leuchtmittelpaare kann dadurch erkennbar symbolisiert werden, dass der Motor steht.

Alternativ oder zusätzlich kann gemäß einer Weiterbildung der Erfindung auch nur ein Leuchtmittel oder ein Leuchtmittelpaar im Gleichtaktblinken geschaltet sein, wenn bei eingeschaltetem Motor der Motor steht. Dies wird zweckmäßigerweise dann so geschaltet, wenn die stehende Motorfunktion nicht bestimmungsgemäß ist, also beispielsweise bei festsitzendem Rotor oder Überlastzustand.

Grundsätzlich können für den erfindungsgemäßen Elektromotor unterschiedliche Leuchtmittel zum Einsatz kommen, besonders vorteilhaft ist es jedoch, sämtliche Leuchtmittel als Leuchtdioden auszubilden, da diese kostengünstig verfügbar sind, einen geringen Energieverbrauch aufweisen und lange Zeit stabil arbeiten.

Gemäß einer vorteilhaften Weiterbildung erfolgt die Betriebszustandskennzeichnung nicht nur durch Darstellung der Motorbewegung sondern vorzugsweise zusätzlich durch Farbdarstellungen. Hierzu sind gemäß einer Weiterbildung der Erfindung Dreifarbenleuchtdioden vorgesehen, vorzugsweise in den Farben rot, grün und gelb. Alternativ können solche Dreifarbenleuchtdioden auch durch drei einzelne Leuchtdioden gebildet sein. Die Farben rot, grün und gelb sind selbsterklärend und entsprechen der internationalen Ampelkennzeichnung, können also bei geeigneter Verwendung selbsterklärend Betriebszustände darstellen. Dabei sind bevorzugt die Leuchtdioden grün geschaltet für bestimmungsgemäße Betriebszustände des Motors. Für nicht bestimmungsgemäße Betriebszustände des Motors sind vorteilhaft die Leuchtdioden rot geschaltet. Die Schaltung der gelben Leuchtdioden kann für Betriebszustände Verwendung finden, die beispielsweise gerade noch bestimmungsgemäß sind, jedoch nicht auf Dauer. So kann beispielsweise bei kurzzeitiger Überlastung des Motors dies durch die Einschaltung der gelben Leuchtdioden symbolisiert werden, wobei nach Überschreiten der zulässigen Belastungszeit dann schließlich die roten Leuchtdioden eingeschaltet werden, um den nicht bestimmungsgemäßen Zustand oder das unmittelbar bevorstehende Abschalten des Motor zu kennzeichnen.

Vorteilhaft werden die Leuchtmittel zur Anzeige von Betriebszuständen an einer Stirnseite des Motorgehäuses angebracht, grundsätzlich können diese jedoch auch an anderer Stelle oder auch entfernt vom Motor angebracht sein. So ist es gemäß einer Weiterbildung der Erfindung denkbar, dass die vorbeschriebene Anordnung von Leuchtmitteln zur Anzeige von unterschiedlichen Betriebszuständen nicht am Motor sondern am Bedienteil, das gegebenenfalls drahtlos angebunden ist, zusätzlich oder auch ausschließlich angeordnet sein.

Besonders vorteilhaft wird der erfindungsgemäße Elektromotor mit seiner Signaleinrichtung zur Betriebszustandsanzeige im Zusammenhang mit einem Kreiselpumpenaggregat eingesetzt, wobei die Leuchtmittel an der von der Pumpe abgewandten und quer zur Motorachse angeordneten Stirnseite oder an einem am Motor angeordneten Klemmenkasten angeordnet sind. Besonders vorteilhaft wird eine solche Signaleinrichtung bei sogenannten Nassläufern einzusetzen sein, d. h. bei Motoren, insbesondere von Umwälzpumpen, bei denen der Rotor in einem Spaltrohr läuft, welches flüssigkeitsgefüllt ist und bei dem daher typischerweise die rotierenden Teile des Motors nicht sichtbar sind. Gerade bei solchen Motoren ist das Vorsehen einer solchen Betriebszustandsanzeige von Vorteil, um den Motorzustand, insbesondere die Bewegung des Rotors, erkennbar zu machen. So kann vorteilhaft bei Heizungsumwälzpumpen oder anderen Umwälzpumpen eine Signaleinrichtung der vorbeschriebenen Art vorgesehen sein. Eine solche Signaleinrichtung ist insbesondere von Vorteil an Orten, die schlecht zugänglich oder ungenügend beleuchtet sind, wie dies beispielsweise in Heizungskellern, Pumpensümpfen, Fäkalienhebeanlagen und dergleichen häufig der Fall ist. Insbesondere bei diesen Anwendungen ist eine solche selbsterklärende Signaleinrichtung von Vorteil, da Bedienungsanleitungen meist nicht zugänglich oder zumindest schlecht lesbar sind und Aufdrucke am Aggregat selbst aufgrund der häufig herrschenden rauen Umwelteinflüsse in Mitleidenschaft gezogen sein können.

Die Signaleinrichtung zur Anzeige von mindestens zwei unterschiedlichen Betriebszuständen des Motors ist anhand eines in der Zeichnung dargestellten Ausführungsbeispiels dargestellt, welches eine Signaleinrichtung am Klemmenkasten eines Motors beispielhaft zeigt. Es zeigen:
- Fig. 1: die Stirnansicht eines Klemmenkastens eines Elektromotors,
- Fig. 2: die Ansicht gemäß Fig. 1 mit teilweise entfernter Abdeckfolie,
- Fig. 3: die die Signaleinrichtung, eine Anzeige und Schaltmittel umfassende Platine,
- Fig. 4: eine Draufsicht auf die Signaleinrichtung,
- Fig. 5: eine Seitenansicht der Signaleinrichtung,
- Fig. 6: ein elektrisches Schaltbild der Signaleinrichtung,
- Fig. 7: ein Diagramm, welches die Einschaltzeiten der ringförmig angeordneten Leuchtmittel zueinander darstellt und
- Fig. 8: ein Schaltbild in Darstellung gemäß Fig. 7 mit überlappenden Einschaltzeiten.

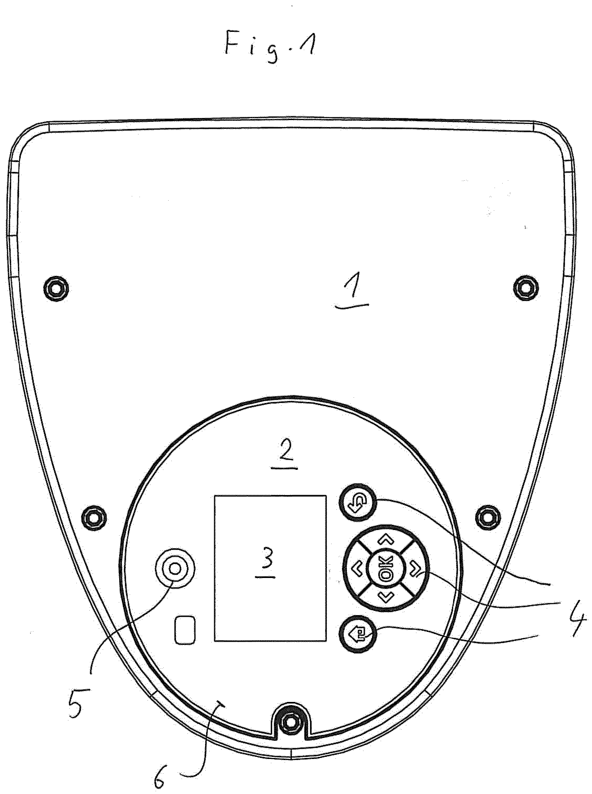

Der in Fig. 1 dargestellte Klemmenkasten ist an der einen Stirnseite eines hier nicht im Einzelnen dargestellten Elektromotors angeordnet, an dessen anderem Ende die Motorwelle austritt. Der Klemmenkasten 1 überragt den Motor nicht nur stirnseitig sondern auch radial und beinhaltet einen elektronischen Drehzahlsteller, wie dies bei modernen Elektromotoren zum Stand der Technik zählt.

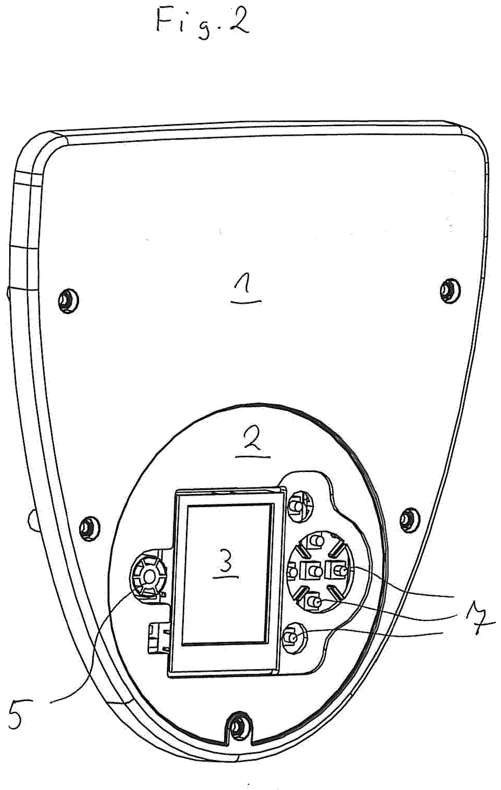

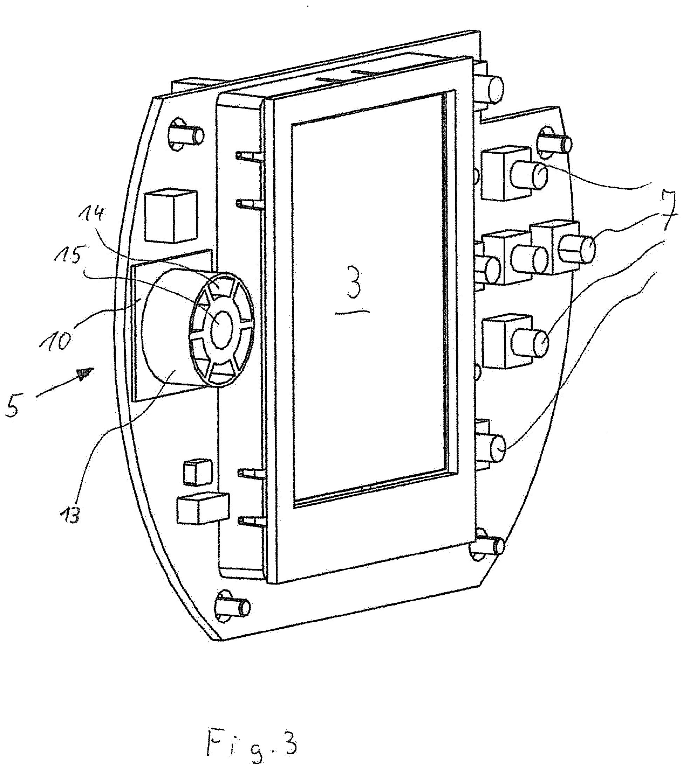

Am Klemmenkasten 1 ist ein Anzeige- und Bedienfeld 2 vorgesehen mit einem Display 3 mit druckempfindlichen Bedienfeldern 4 sowie mit einer Signaleinrichtung 5. Auf die Funktion von Display 3 und Bedienfeld 4 soll hier nicht im einzelnen eingegangen werden, es handelt sich um übliche menugeführte Bedieneinheiten, wie sie aus dem Stand der Technik hinlänglich bekannt sind. Sie bestehen, wie insbesondere Fig. 2 und 3 veranschaulichen, aus mehreren unter einer Folie 6 angeordneten Tastern 7, die geschützt unter Folie 6 liegen und durch diese hindurch bedienbar sind. Ebenso ist das Display 3 durch die Folie 6 geschützt, die in diesem Bereich durchsichtig ist. Auch die Signaleinrichtung 5 ist durch einen durchsichtigen Teil der Folie überdeckt und zwar so, dass über der Signaleinrichtung 5 ein zentrales Fenster 8 und ein dieses mit Abstand umgebendes ringförmiges Fenster 9 gebildet sind, die durchsichtig sind, wohingegen der übrige Teil der Folie abgedeckt, d. h. undurchsichtig ausgebildet ist.

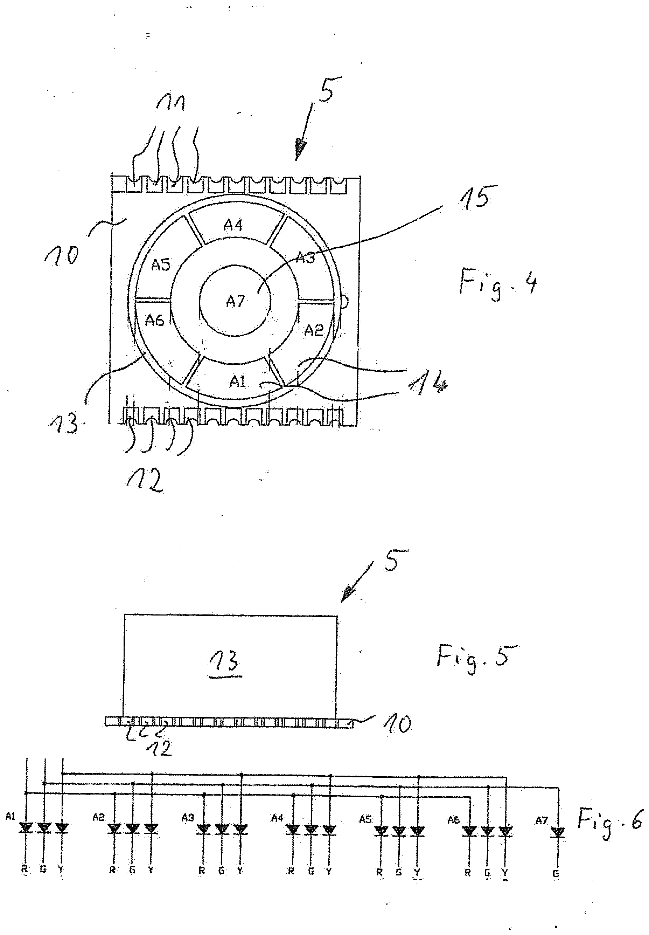

Die Signaleinrichtung 5 ist anhand der Fig. 4 - 6 im einzelnen dargestellt. Die Signaleinrichtung 5 weist eine Platine 10 auf, auf der in kreisringförmiger Anordnung 6 Leuchtdioden A1 - A6 angeordnet sind. Die Leuchtdioden sind Dreifarbenleuchtdioden mit den Farben rot (R), grün (G) und gelb (Y). Sie sind in einem gemeinsamen Vergussgehäuse angeordnet, wie dies zum Stand der Technik zählt, bestehen jedoch elektrisch gesehen aus drei Einzeldioden für jede der vorgenannten Farben. Im Zentrum der ringförmigen Anordnung ist eine weitere Leuchtdiode A7 angeordnet, welche einfarbig und grün ist.

Die Leuchtdioden sind auf der in Fig. 4 teilweise sichtbaren Oberseite der Platine 10 aufgelötet und durch Leiterbahnen auf der Platine zu seitlichen Anschlusskontakten 11 und 12 herausgeführt. Wie anhand von Fig. 4 ersichtlich ist, sind an einer Seite der Platine 10 Kontakte 11 und an der abgewandt gegenüberliegend anderen Seite Kontakte 12 herausgeführt, welche zum Anschluss der Leuchtdioden A1 - A7 vorgesehen sind. Von den Kontakten 11 und 12 sind jeweils einer ein Massekontakt während die anderen den Leuchtdioden A1 - A7 zugeordnet sind, woraus sich die Belegung von zehn Kontakten 11 bzw. neun Kontakten 12 ergeben.

Auf der Platine 10 ist ein ringförmiges Kunststoffbauteil 13 aufgesetzt, welches in dem ringförmigen Bereich, der unter dem zentralen Fenster 8 geordnet ist, sechs Segmente 14 sowie eine zentrale Ausnehmung 15 aufweist. Jedes der Segmente 14 nimmt eine der Dreifarbenleuchtdioden A1 - A6 auf, die zentrale Ausnehmung 15 die einfarbige Leuchtdiode A7. Die Segmente 14 und die zentrale Ausnehmung 15 sind mit durchsichtigem Kunststoff bis zur Oberseite vergossen, sodass sich in eingebautem Zustand beim Einschalten beispielsweise einer der Dioden A1 - A6 eine gleichmäßige Lichtwirkung in dem zugehörigen Segment ergibt.

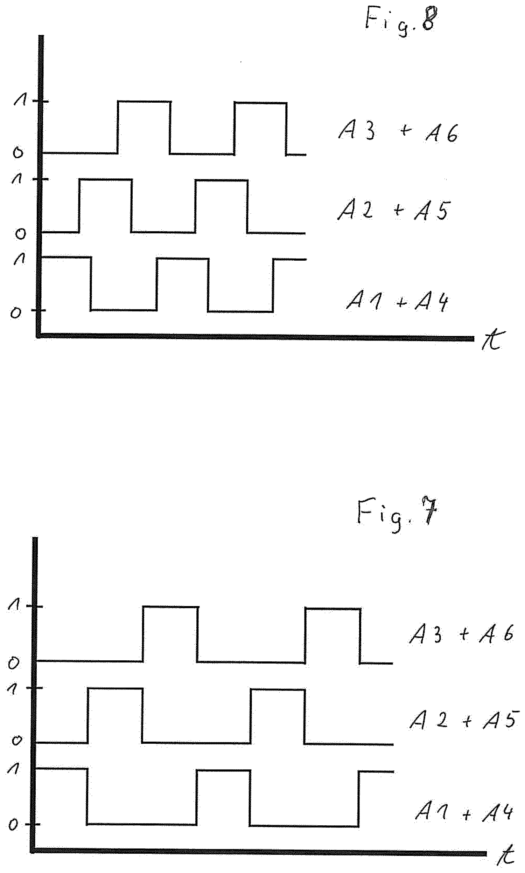

Diese Signaleinrichtung 5 kann an geeigneter Stelle auf quasi beliebigen Platinen oder auch anderen Anschlussbauteilen angeordnet werden und muss mittels der Kontakte 11 - 12 mit einem entsprechenden Steuergerät verbunden werden. Anhand von Fig. 7 ist dargestellt, wie die ringförmig angeordneten Leuchtdioden A1 - A6 angesteuert werden, um einen linksdrehenden Motor anzuzeigen. Dabei sind die Leuchtdioden A1 - A6 jeweils paarweise angesteuert und zwar paarweise gegenüberliegend, d. h. die Leuchtdiode A1 leuchtet (Zustand 1) gleichzeitig mit der Leuchtdiode A4, die Leuchtdiode A2 mit der Leuchtdiode A5 und die Leuchtdiode A3 mit der Leuchtdiode A6. Beginnend mit dem Leuchtdiodenpaar A1, A4, das für beispielsweise 0,4 Sekunden eingeschaltet wird, wird unmittelbar anschließend (Fig. 7) oder leicht überlappend (Fig. 8) das Leuchtdiodenpaar A3, A6 ebenfalls für 0,4 Sekunden darauffolgend eingeschaltet. Nach Ablauf dieser 0,4 Sekunden oder kurz überlappend wird das Leuchtdiodenpaar A2, A5 für wiederum 0,4 Sekunden eingeschaltet, nach deren Ablauf sich der Zyklus mit Einschaltung des Leuchtdiodenpaares A1, A4 wiederholt. Auf diese Weise entsteht der Eindruck eines sich links drehenden Körpers entsprechend dem sich dann links drehenden Motor.

Bei rechts drehendem Motor erfolgt die Ein- und Ausschaltung der Leuchtdioden in umgekehrter Reihenfolge wie vorbeschrieben. Weiterhin kann über die Einschaltdauer ein zumindest grober Hinweis auf den Drehzahlbereich gegeben sein. So können beispielsweise drei verschiedene Einschaltdauern 0,4, 0,6 und 0,8 Sekunden vorgesehen sein, wobei die Einschaltdauer 0,8 Sekunden für einen unteren Drehzahlbereich, die Einschaltdauer 0,6 Sekunden für einen mittleren Drehzahlbereich und die Einschaltdauer 0,4 Sekunden für einen hohen Drehzahlbereich steht.

Bei bestimmungsgemäßen Betrieb werden ausschließlich die grünen Leuchtdioden A1 - A6 geschaltet, die roten und gelben Leuchtdioden verbleiben inaktiv. Bei stehendem Rotor und eingeschalteter Spannungsversorgung leuchtet jeweils nur ein Paar der grünen Leuchtdioden A1 - A6. Die gelben Leuchtdioden sind für einen sogenannten "warning mode" vorgesehen und bei laufendem Motor zweckmäßigerweise so nacheinander angesteuert, dass diese paarweise oder einzeln umlaufend leuchtend sind, sodass von außen sofort deutlich sichtbar wird, dass der Motor einen Zustand erreicht hat, der beispielsweise nur zeitweise befahren werden kann. Die roten Leuchtdioden sind grundsätzlich nur für unzulässige Betriebszustände vorgesehen, beispielsweise wenn die Pumpe im Überlastbereich läuft oder unzulässig warm wird. Die roten Leuchtdioden signalisieren, dass die Pumpe unmittelbar vor dem vorzugsweise automatisch erfolgenden Abschalten steht. Auch die roten Leuchtdioden können einzeln oder paarweise je nach Zustand der Pumpe umlaufend oder stehend leuchten oder blinken.

Die zentrale gründe Leuchtdiode ist vorstehend zur Anzeige eines Steuermodus vorgesehen, welcher signalisiert, dass der Motor im Fernsteuermodus läuft, d. h. beispielsweise im Verbund mit mehreren Motoren, wie dies bei Pumpenaggregaten in größeren Anlagen üblich ist oder auch in Einzelkonfiguration per Fernsteuerung.

### Bezugszeichenliste

- 1: Klemmenkasten
- 2: Anzeige- und Bedienfeld
- 3: Display
- 4: Bedienfeld
- 5: Signaleinrichtung
- 6: Folie
- 7: Taster
- 8: Zentrales Fenster
- 9: Ringförmiges Fenster
- 10: Platine
- 11: Kontakte
- 12: Kontakte
- 13: Kunststoffbauteil
- 14: Segmente
- 15: Zentrale Ausnehmung

- A1 - A6: Leuchtdioden dreifarbig R, G, Y
- A7: Leuchtdiode einfarbig G
- R: rot
- G: grün
- Y: gelb

## Patentansprüche

1. Bedienteil für einen Elektromotor, wobei das Bedienteil eine Signaleinrichtung (5) zur Anzeige von mindestens zwei unterschiedlichen Betriebszuständen des Motors aufweist, mit mindestens sechs elektrischen Leuchtmitteln (A1 - A6), die bei laufendem Motor blinkend geschaltet sind, **dadurch gekennzeichnet, dass** die mindestens sechs Leuchtmittel (A1 - A6) als Leuchtmittelring ringförmig angeordnet vorgesehen sind, welche bei laufendem Motor synchron zueinander jedoch paarweise im Uhrzeigersinn oder im Gegenuhrzeigersinn aufeinanderfolgend zeitlich versetzt blinkend geschaltet sind, wobei jeweils zwei der Leuchtmittel (A1 - A6) diametral im Leuchtmittelring gegenüberliegend als ein Leuchtmittelpaar (A1, A4; A2, A5; A3, A6) eingeschaltet sind, wobei bei Ausfall eines Leuchtmittels nicht die ganze Anzeige ausfällt, sondern dann für dieses Leuchtmittelpaar mit einem Leuchtmittel noch in Betrieb bleibt.

2. Bedienteil nach einem der vorhergehenden Ansprüche, **dadurch gekennzeichnet, dass** das Bedienteil drahtlos an den Elektromotor angebunden ist.

3. Bedienteil nach einem der vorhergehenden Ansprüche, **dadurch gekennzeichnet, dass** die Leuchtmittel (A1 - A6) kreisringförmig angeordnet sind.

4. Bedienteil nach einem der vorhergehenden Ansprüche, **dadurch gekennzeichnet, dass** innerhalb des Leuchtmittelringes (A1 - A6) ein zentrales Leuchtmittel (A7) angeordnet ist.

5. Bedienteil nach einem der vorhergehenden Ansprüche, **dadurch gekennzeichnet, dass** weitere Leuchtmittel in einem oder mehreren vorzugsweise konzentrischen Ringen angeordnet sind.

6. Bedienteil nach einem der vorhergehenden Ansprüche, **dadurch gekennzeichnet, dass** bei eingeschaltetem stehenden Motor mindestens ein Leuchtmittel (A1 - A6) oder Leuchtmittelpaar dauerhaft eingeschaltet ist.

7. Bedienteil nach einem der vorhergehenden Ansprüche, **dadurch gekennzeichnet, dass** bei eingeschaltetem stehendem Motor nur ein Leuchtmittel (A1 - A6) blinkend oder nur ein Leuchtmittelpaar im Gleichtakt blinkend geschaltet ist.

8. Bedienteil nach einem der vorhergehenden Ansprüche, **dadurch gekennzeichnet, dass** ein Leuchtmittel, vorzugsweise alle Leuchtmittel durch Leuchtdioden (A1 - A6) gebildet sind.

9. Bedienteil nach einem der vorhergehenden Ansprüche, **dadurch gekennzeichnet, dass** die Leuchtdioden durch Dreifarbenleuchtdioden (A1 - A6) gebildet sind, vorzugsweise der Farben rot, grün und gelb.

10. Bedienteil nach einem der vorhergehenden Ansprüche, **dadurch gekennzeichnet, dass** bei bestimmungsgemäßen Betriebszuständen des Motors die Leuchtdioden (A1 - A6) grün geschaltet sind.

11. Bedienteil nach einem der vorhergehenden Ansprüche, **dadurch gekennzeichnet, dass** bei nicht bestimmungsgemäßen Betriebszuständen des Motors die Leuchtdioden rot (A1 - A6) geschaltet sind.

12. Bedienteil nach einem der vorhergehenden Ansprüche, **dadurch gekennzeichnet, dass** er Teil eines Kreispumpenaggregates bildet und die Leuchtmittel an der von der Pumpe abgewandten und quer zur Motorachse angeordneten Stirnseite oder an einem am Motor angeordneten Klemmenkasten (1) angeordnet sind.

13. Elektromotor mit einem Bedienteil nach einem der vorhergehenden Ansprüche.

## Claims

1. A control unit for an electric motor, the control unit having a signaling device (5) for displaying at least two different operating states of the motor, with at least six electric illuminants (A1-A6) which are switched in a flashing manner when the motor is running, **characterized in that** the at least six illuminants (A1-A6) are provided, arranged in an annular manner, as a ring of illuminants which are switched in a flashing manner synchronously to one another but successively in a time-shifted manner in pairs in a clockwise or anticlockwise direction when the motor is running, wherein two of the illuminants (A1-A6), which are diametrically opposite in the ring, are switched on as an illuminant pair (A1, A4; A2, A5; A3, A6), wherein in case one illuminant fails, the whole display does not fail, but rather then still remains in operation for this illuminant pair using one illuminant.

2. The control unit according to one of the preceding claims, **characterized in that** the control unit is wirelessly linked to the electric motor.

3. The control unit according to one of the preceding claims, **characterized in that** the illuminants (A1-A6) are arranged in an annular manner.

4. The control unit according to one of the preceding claims, **characterized in that** a central illuminant (A7) is arranged inside the ring of illuminants (A1-A6).

5. The control unit according to one of the preceding claims, **characterized in that** further illuminants are arranged in one or more preferably concentric rings.

6. The control unit according to one of the preceding claims, **characterized in that** when the motor is switched on, at least one illuminant (A1-A6) or illuminant pair is permanently switched on.

7. The control unit according to one of the preceding claims, **characterized in that** when the motor is switched on, only one illuminant (A1-A6) is switched in a flashing manner or only one illuminant pair is switched synchronously in a flashing manner.

8. The control unit according to one of the preceding claims, **characterized in that** an illuminant, preferably all illuminants are formed by light-emitting diodes (A1-A6).

9. The control unit according to one of the preceding claims, **characterized in that** the light-emitting diodes are formed by three-colour light-emitting diodes (A1-A6), preferably the colours red, green and yellow.

10. The control unit according to one of the preceding claims, **characterized in that** the light-emitting diodes (A1-A6) are switched to green in normal operating states of the motor.

11. The control unit according to one of the preceding claims, **characterized in that** the light-emitting diodes (A1-A6) are switched to red in abnormal operating states of the motor.

12. The control unit according to one of the preceding claims, **characterized in that** it forms part of a centrifugal pump assembly and the illuminants are arranged on the end face, which faces away from the pump and is arranged transversely to the motor axis, or on a terminal box (1) arranged on the motor.

13. An electric motor having a control unit according to one of the preceding claims.

## Revendications

1. Elément de commande pour un moteur électrique, sachant que l'élément de commande comporte un dispositif de signalisation (5) pour l'affichage d'au moins deux états de fonctionnement différents du moteur, avec au moins six éléments d'éclairage électriques (A1 - A6), qui sont allumés clignotant lorsque le moteur est en marche, **caractérisé en ce qu'**au moins les six éléments d'éclairage (A1 - A6) sont prévus disposés en forme d'anneau en tant qu'anneau d'éléments d'éclairage, lesquels, lorsque le moteur est en marche, sont allumés clignotant successivement décalés dans le temps, de façon synchronisée l'un par rapport à l'autre, toutefois par paire, dans le sens des aiguilles d'une montre ou dans le sens inverse aux aiguilles d'une montre, sachant respectivement que deux des éléments d'éclairage (A1 - A6) sont allumés opposés diamétralement dans l'anneau d'éléments d'éclairage sous la forme d'une paire d'éléments d'éclairage (A1, A4 ; A2, A5 ; A3, A6), sachant qu'en cas de panne d'un élément d'éclairage tout l'affichage ne tombe pas en panne, mais reste encore ensuite en fonctionnement avec un élément d'éclairage pour cette paire d'éléments d'éclairage.

2. Elément de commande selon l'une quelconque des revendications précédentes, **caractérisé en ce que** l'élément de commande est relié sans fil au moteur électrique.

3. Elément de commande selon l'une quelconque des revendications précédentes, **caractérisé en ce que** les éléments d'éclairage (A1 -A6) sont disposés en forme d'anneau circulaire.

4. Elément de commande selon l'une quelconque des revendications précédentes, **caractérisé en ce qu'**un élément d'éclairage central (A7) est disposé à l'intérieur de l'anneau d'éléments d'éclairage (A1 - A6).

5. Elément de commande selon l'une quelconque des revendications précédentes, **caractérisé en ce que** d'autres éléments d'éclairage sont disposés dans un ou plusieurs anneaux de préférence concentriques.

6. Elément de commande selon l'une quelconque des revendications précédentes, **caractérisé en ce qu'**au moins un élément d'éclairage (A1 - A6) ou une paire d'éléments d'éclairage est allumé(e) en permanence lorsque le moteur est en fonctionnement.

7. Elément de commande selon l'une quelconque des revendications précédentes, **caractérisé en ce que** seul un élément d'éclairage (A1 - A6) est allumé clignotant ou seule une paire d'éléments d'éclairage est allumée clignotante de manière synchronisée lorsque le moteur est en fonctionnement.

8. Elément de commande selon l'une quelconque des revendications précédentes, **caractérisé en ce qu'**un élément d'éclairage, de préférence tous les éléments d'éclairage (A1 - A6) sont formés par des diodes électroluminescentes.

9. Elément de commande selon l'une quelconque des revendications précédentes, **caractérisé en ce que** les diodes électroluminescentes sont formées par des diodes électroluminescentes tricolores (A1 - A6), de préférence, de couleur rouge, verte et jaune.

10. Elément de commande selon l'une quelconque des revendications précédentes, **caractérisé en ce que** les diodes électroluminescentes (A1 - A6) sont allumées en vert pour les états de fonctionnement conformes du moteur.

11. Elément de commande selon l'une quelconque des revendications précédentes, **caractérisé en ce que** les diodes électroluminescentes (A1 - A6) sont allumées en rouge pour les états de fonctionnement non conformes du moteur.

12. Elément de commande selon l'une quelconque des revendications précédentes, **caractérisé en ce qu'**il fait partie d'un ensemble de pompe de circuit et les éléments d'éclairage sont disposés sur la face avant éloignée de la pompe et transversalement à l'axe du moteur ou sur un boîtier de connexions (1) disposé sur le moteur.

13. Moteur électrique avec un élément de commande selon l'une quelconque des revendications précédentes.
